# EUROPÄISCHE PATENTANMELDUNG

(11) **EP 2 328 255 A1**
(43) Veröffentlichungstag der Anmeldung: **01.06.2011**
(21) Anmeldenummer: 09177412.5
(22) Anmeldetag: 27.11.2009
(51) Int. Cl.: H02J 7/00, H01R 13/66

(54) **Ladevorrichtung mit schwenkbarer Geräteablage**

(71) Anmelder: GIRA Giersiepen GmbH & Co. KG, 42477 Radevormwald (DE)
(72) Erfinder: Seifert, Roland, 59071, Hamm (DE); Kemmann, Harald, 42555, Velbert (DE)
(74) Vertreter: Patentanwälte Dr. Solf & Zapf

(57) **Zusammenfassung**

Bei einer Ladevorrichtung (1) bestehend aus einem Charger-Gehäuse (2) und einer in dem Charger-Gehäuse (2) montierten Ladeelektronik (32), insbesondere zum elektrischen Laden eines mit einem wiederaufladbaren Energiespeicher versehenen elektronischen Gerätes, zum Beispiel eines Mobiltelefons, soll eine Ladevorrichtung derart gestaltet werden, dass die Ladevorrichtung besonders platzsparend verwendet werden kann, sehr einfach zu benutzen ist, günstig herzustellen ist, und vorzugsweise die Ladekontakte gegen unsachgemäßen Zugang von Kindern schützt, den Stromverbrauch bei Nichtbenutzung automatisch minimiert und keine externen Kabel oder Adapter benötigt. Dies wird dadurch erreicht, dass die Ladevorrichtung einen Ladekoppler (10, 12) zur unmittelbaren Energieübertragung von der Ladeelektronik (32) zu dem Gerät und eine schwenkbare Geräteablage (6) aufweist, wobei die Geräteablage (6) in ihrem ausgeschwenkten Zustand eine Stützfläche (7) für das Gerät in einer Ladestellung bildet.

## Beschreibung

Die Erfindung richtet sich auf eine Ladevorrichtung, bestehend aus einem Charger-Gehäuse und einer in dem Charger-Gehäuse montierten Ladeelektronik, insbesondere zum elektrischen Laden eines mit einem wiederaufladbaren Energiespeicher versehenen elektronischen Gerätes, zum Beispiel eines Mobiltelefons.

Eine bekannte Ladevorrichtung wird in der DE 20 2006 010 690 U1 beschrieben. Hierbei besteht die Ladevorrichtung aus einem modulartig aufgebauten Gehäuse aus Kunststoff, das unterhalb eine Aufnahme einer Ladeelektronik vorsieht und oberhalb als eine rückwandähnliche Fläche ausgebildet ist, die links und rechts und/oder oberhalb mit mindestens einer beweglichen Klemmvorrichtung zur stehenden Anordnung eines Mobiltelefons während des Ladevorgangs ausgebildet ist. Der Andockpunkt ist stufenlos verstellbar, so dass mittels Steckeradapter alle Ausführungsarten von Mobiltelefonen andockbar und/oder in Modulbauweise ausgebildet und nach Bedarf konfigurierbar sind. Des Weiteren ist die Gehäuserückseite so ausgebildet, dass diese an länderspezifische Steckdosen anpassbar ist. Außerdem besitzt die Ladevorrichtung einen manuell zu betätigenden Schalter zum Abschalten der Ladeelektronik. Eine derartige Ladevorrichtung hat den Nachteil, dass sie außerhalb der Steckdose viel Platz in Anspruch nimmt und aufwändig herzustellen ist. Außerdem muss die Ladeelektronik manuell ausgeschaltet werden, um einen Standby-Strom der Ladeelektronik im nicht ladenden Zustand zu vermeiden. Des Weiteren sind die Ladekontakte nicht gegen den Zugang durch Kleinkinder geschützt.

Eine andere bekannte Ladevorrichtung wird in der CN 201134582 Y beschrieben. Hier besteht die Ladevorrichtung aus einer Aufputzdose zum Anschließen an ein Stromnetz eines Gebäudes. Die Ladevorrichtung beinhaltet ebenfalls eine Ladeelektronik und weist an ihrer äußeren Dosenwand eine USB-Buchse zur Aufnahme eines normierten USB-Kabels auf. Auch hier ist ein manueller Schalter zum Abschalten der Ladeelektronik vorgesehen. Diese Ladevorrichtung hat zusätzlich noch den Nachteil, dass ein externes Kabel zum Anschluss des zu ladenden Gerätes verwendet werden muss.

Der Erfindung liegt daher die Aufgabe zugrunde, eine Ladevorrichtung zu schaffen, die besonders platzsparend verwendet werden kann, sehr einfach zu benutzen ist, günstig herzustellen ist, und vorzugsweise die Ladekontakte gegen unsachgemäßen Zugang von Kindern schützt, den Stromverbrauch bei Nichtbenutzung automatisch minimiert und keine externen Kabel oder Adapter benötigt.

Bei einer Ladevorrichtung der eingangs beschriebenen Art wird die Aufgabe erfindungsgemäß dadurch gelöst, dass die Ladevorrichtung einen Ladekoppler 10,12 zur unmittelbaren Energieübertragung von der Ladeelektronik zu dem Gerät und eine schwenkbare Geräteablage aufweist, wobei die Geräteablage in ihrem ausgeschwenkten Zustand eine Stützfläche für das Gerät in einer Ladestellung bildet. Eine solche Ladevorrichtung ermöglicht eine besonders platzsparende Ausgestaltung der Ladevorrichtung und eine besonders einfache Bedienung durch die schwenkbare Geräteablage.

In einer Ausführungsform der Erfindung ist die Geräteablage (6) mittels einer Schwenkvorrichtung mit einer Kraft F_{G} beaufschlagt, die in entgegengesetzter Richtung zu einer Schwerkraft Fₛ des zu ladenden Gerätes wirkt, so dass die Kraft F_{G} die Geräteablage von einer ausgeschwenkten Ladestellung automatisch in eine eingeschwenkte Ruhestellung schwenkt, wenn das Gerät nicht auf der Geräteablage liegt. Zusätzlich betätigt die Schwenkvorrichtung der Geräteablage einen Netzschalter in dem Charger-Gehäuse, der die Ladeelektronik in eingeschwenkter Ruhestellung der Geräteablage vom Stromnetz trennt und in ausgeschwenkter Ladestellung mit dem Stromnetz verbindet. Dies ermöglicht ein automatisches Verschließen der Ladevorrichtung und ein automatisches Abschalten der Ladeelektronik, so dass einerseits die Ladevorrichtung gegen unsachgemäßen Zugang, insbesondere durch Kleinkinder, geschützt wird und andererseits ein Standby-Strom der Ladeelektronik automatisch abgeschaltet und somit verhindert wird.

Zusätzlich besteht in einer Ausführungsform der Ladekoppler 10,12 aus einem an die Steckverbindung des Gerätes angepassten Steckermodul, insbesondere einem Micro-USB-Stecker, so dass das zu ladende Gerät direkt und unmittelbar ohne die Verwendung eines weiteren Kabels angeschlossen werden kann.

Die vorgenannten sowie beanspruchten und in den Ausführungsbeispielen beschriebenen erfindungsgemäß zu verwendenden Bauteile unterliegen in ihrer Größe, Form, Gestaltung, Materialauswahl und technischen Konzeptionen keinen besonderen Ausnahmebedingungen, so dass die in dem Anwendungsgebiet bekannten Auswahlkriterien uneingeschränkt Anwendung finden können.

Weitere Einzelheiten, Merkmale und vorteilhafte Weiterbildungen der Erfindung ergeben sich aus den im Folgenden beschriebenen und in den Zeichnungen dargestellten Ausführungsbeispielen sowie aus den Unteransprüchen. Es zeigen:
- Fig. 1: eine Seitenansicht einer erfindungsgemäßen Ladevorrichtung in Ladestellung,
- Fig. 2: eine Rückansicht einer erfindungsgemäßen Ladevorrichtung,
- Fig. 3: eine Frontansicht einer erfindungsgemäßen Ladevorrichtung in Ladestellung,
- Fig. 4: eine Seitenansicht einer zweiten Ausführungsform einer erfindungsgemäßen Ladevorrichtung in Ladestellung,
- Fig. 5: eine skizzenhafte Darstellung einer ersten Ausführungsform einer Mechanik einer erfindungsgemäßen Ladevorrichtung in Ladestellung,
- Fig. 6: eine skizzenhafte Darstellung einer ersten Ausführungsform einer Mechanik einer erfindungsgemäßen Ladevorrichtung in Ruhestellung,
- Fig. 7: eine skizzenhafte Darstellung einer zweiten Ausführungsform einer Mechanik einer erfindungsgemäßen Ladevorrichtung in Ladestellung,
- Fig. 8: eine skizzenhafte Darstellung einer zweiten Ausführungsform einer Mechanik einer erfindungsgemäßen Ladevorrichtung in Ruhestellung,
- Fig. 9: eine skizzenhafte Darstellung einer dritten Ausführungsform einer Mechanik einer erfindungsgemäßen Ladevorrichtung in Ladestellung,
- Fig. 10: eine skizzenhafte Darstellung einer dritten Ausführungsform einer Mechanik einer erfindungsgemäßen Ladevorrichtung in Ruhestellung,
- Fig. 11: ein Blockschaltbild für die erste Ausführungsform einer erfindungsgemäßen Ladevorrichtung,
- Fig. 12: ein Blockschaltbild für die dritte Ausführungsform einer erfindungsgemäßen Ladevorrichtung,
- Fig. 13: ein Blockschaltbild für eine vierte Ausführungsform einer erfindungsgemäßen Ladevorrichtung,
- Fig. 14: eine skizzenhafte Darstellung einer vierten Ausführungsform einer Mechanik einer erfindungsgemäßen Ladevorrichtung in Ladestellung,
- Fig. 15: eine skizzenhafte Darstellung einer vierten Ausführungsform einer Mechanik einer erfindungsgemäßen Ladevorrichtung in Ruhestellung.

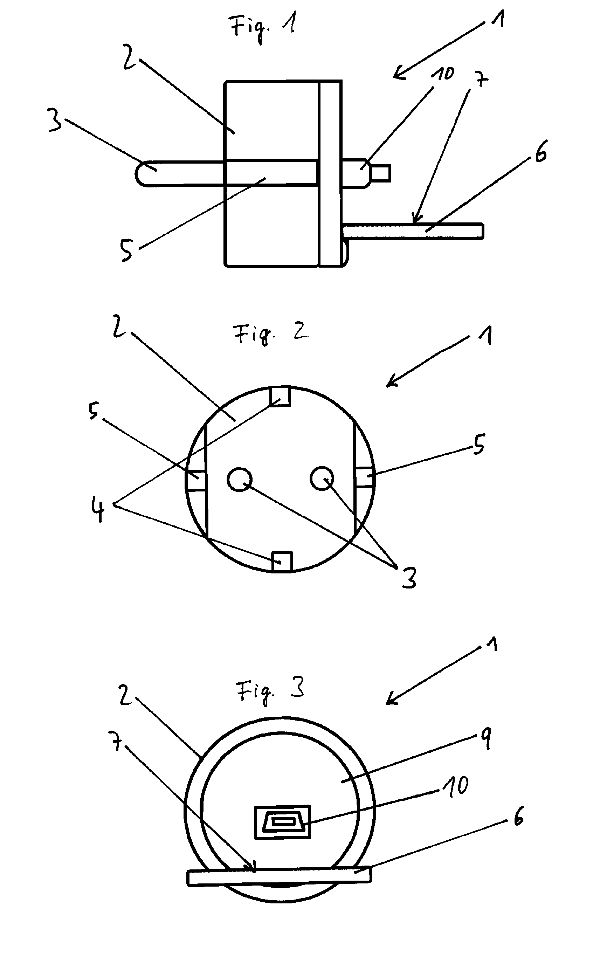

Fig. 1, Fig. 2, Fig. 3 zeigen eine erste Ausführungsform einer erfindungsgemäßen Ladevorrichtung 1. In Fig. 1 wird die Ladevorrichtung 1 in einer Ladestellung ohne zu ladendes Gerät dargestellt. Die Ladevorrichtung 1 besteht aus einem Charger-Gehäuse 2 und einer in dem Charger-Gehäuse 2 montierten, nicht gezeigten Ladeelektronik 32. Die Form und Maße des Charger-Gehäuses 2 sind an die länderspezifischen Formen und Maße von Netzstrom-Steckdosen angepasst. In der dargestellten Ausführungsform ist das Charger-Gehäuse 2 an eine deutsche Schuko-Steckdose angepasst. In Fig. 2 ist die Rückseite des Charger-Gehäuses 2 dargestellt, die einen passend zur länderspezifischen Steckdose ausgebildeten Netzstrom-Stecker bildet. In der dargestellten Ausführungsform bildet sie einen deutschen Schuko-Stecker. Das Charger-Gehäuse 2 der dargestellten Ausführungsform ist zylinderförmig ausgebildet und weist an seiner Umfangswandung die für einen Schuko-Stecker üblichen achsparallel verlaufenden Steckerkontakte 3, Aussparungen für Erdungskontakte 4, Ansätze 5 als Führungshilfe auf. Dabei ist die Dicke des Charger-Gehäuses 2 so bemessen, dass es im eingesetzten Zustand bündig mit dem Gehäuse der Steckdose abschließt. Auf der in Fig. 3 dargestellten Frontseite des Charger-Gehäuses 2 ist eine als ringförmiger Rahmen ausgebildete Geräteablage 6 angeordnet. Die Geräteablage 6 ist über eine in dem Charger-Gehäuse 2 befindliche nicht dargestellte Schwenkvorrichtung schwenkbar mit dem Charger-Gehäuse 2 verbunden. Die Geräteablage 6 bildet in ihrer ausgeschwenkten Stellung mit ihrer inneren, zum Charger-Gehäuse 2 gewandten Seite eine Stützfläche 7, auf der das Gerät in der Ladestellung aufgelegt wird. Der Außendurchmesser der Geräteablage 6 ist an den Außendurchmesser des Charger-Gehäuses 2 angepasst und schließt mit der Umfangswandung des Charger-Gehäuses 2 in der eingeschwenkten Stellung bündig ab. Das Charger-Gehäuse 2 weist auf seiner Frontseite einen kreisförmigen Ansatz 9 auf, der in seinem Durchmesser dem Innendurchmesser der Geräteablage 6 und in seiner Höhe der Dicke der Geräteablage 6 entspricht, so dass die Geräteablage 6 in ihrer eingeschwenkten Stellung in Ruhestellung den kreisförmigen Ansatz 9 umschließt und die Frontseite der Geräteablage 6 bündig mit der Frontseite des kreisförmigen Ansatzes 9 abschließt. Die Geräteablage 6 kann auch andere Ausführungsformen haben, wie zum Beispiel einen polygonförmigen Rahmen oder eine Gabel, wobei der Ansatz 9 eine entsprechende Gegenform aufweisen würde. Alternativ könnte die Geräteablage 6 auch als eine kreisförmige oder polygonförmige Klappe ausgebildet sein, die das Charger-Gehäuse 2 in der eingeschwenkten Ruhestellung abdeckt.

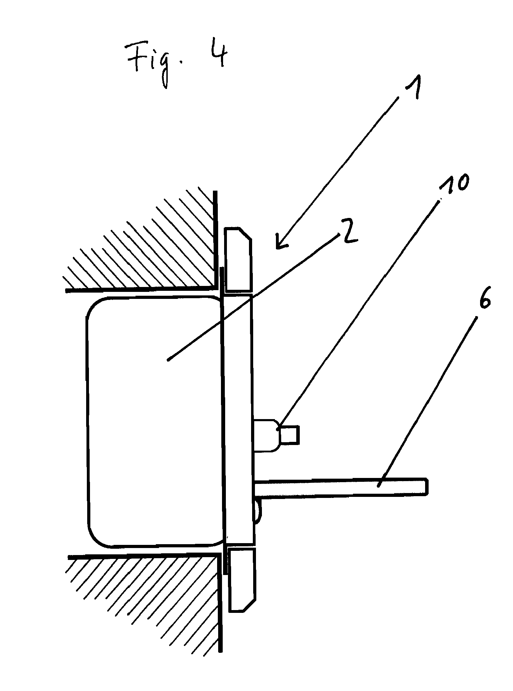

In Fig. 4 ist eine zweite Ausführungsform des Charger-Gehäuses 2 als ein Einsatzteil für eine Aufputz- oder Unterputzdose der Gebäudeinstallationstechnik zum Einbau in eine Wand dargestellt, so dass die Ausbildung der Rückseite als Netzstrom-Stecker entfällt.

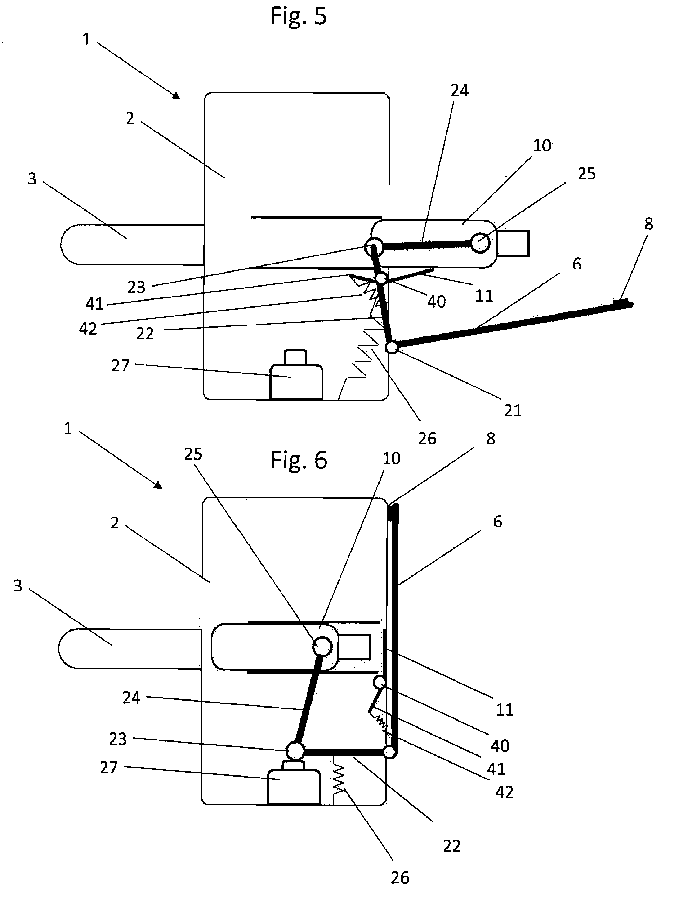

Fig. 5 zeigt eine Skizze einer ersten Ausführungsform einer Mechanik einer erfindungsgemäßen Ladevorrichtung 1 in Ladestellung. In dem Charger-Gehäuse 2 ist ein Ladekoppler 10,12 zur unmittelbaren Energieübertragung von der nicht dargestellten Ladeelektronik 32 zu dem nicht dargestellten zu ladenden Gerät angeordnet. Vorzugsweise kann der Ladekoppler 10,12 aus einem an die Steckverbindung des Gerätes angepassten Steckermodul 10, insbesondere einem Micro-USB-Stecker bestehen. Beispielhaft ist das Steckermodul 10 in dem Charger-Gehäuse 2 , z.B. durch Führungsschienen, verschiebbar gelagert und kann mittels einer Schwenkvorrichtung durch eine insbesondere im Zentrum der Frontseite des Charger-Gehäuses 2 angeordnete Steckeröffnung ausgefahren werden. Die Schwenkvorrichtung besteht vorzugsweise aus einem Scharnier 21, einer Gelenkstange 22, einem Gelenk 23, einer zweiten Gelenkstange 24 und einem zweiten Gelenk 25. Das Steckermodul 10 ist über das zweite Gelenk 25 mit der Schwenkvorrichtung verbunden. Die Geräteablage 6 ist über das Scharnier 21 schwenkbar mit dem Charger-Gehäuse 2 und fest mit der Gelenkstange 22 der Schwenkvorrichtung verbunden. Die Schwenkvorrichtung ist mit einer Kraft F_{G} beaufschlagt, die in entgegengesetzter Richtung zu einer Schwerkraft Fₛ des zu ladenden Gerätes in Ladestellung wirkt, und die Schwenkvorrichtung ist so bemessen, dass in der Ladestellung der Ladevorrichtung 1 das Steckermodul 10 aus dem Charger-Gehäuse 2 herausragt, so dass das zu ladende Gerät direkt ohne zusätzliche Kabel oder Adapter auf das Steckermodul 10 aufgesteckt werden kann und das Gerät von der ausgeschwenkten Geräteablage 6 in seiner Ladestellung durch die Kraft F_{G} der Schwenkvorrichtung gestützt wird.

Fig. 6 zeigt eine Skizze der ersten Ausführungsform von Fig. 5 in Ruhestellung, d.h. ohne aufgelegtes zu ladendes Gerät. Die auf der Schwenkvorrichtung beaufschlagte Kraft F_{G} bringt die Geräteablage 6 automatisch zum Einschwenken und zum Anliegen an der Frontseite des Charger-Gehäuses 2. Dabei wird das Steckermodul 10 durch die Schwenkvorrichtung in das Charger-Gehäuse 2 zurückgezogen. Zusätzlich kann eine Ladesteckerabdeckung 11 die Steckeröffnung des Gehäuses 2 im versenkten Zustand des Steckermoduls 10 verschließen, wobei die Ladesteckerabdeckung 11 auf einem Scharnier 40 im Charger-Gehäuse gelagert ist und durch eine mit der Schwenkvorrichtung verbundene Gelenkstange 41 und eine daran befestigte zweite Feder 42, welche ebenfalls mit dem Charger-Gehäuse 2 befestigt ist, automatisch eingeschwenkt wird und dadurch die Steckeröffnung abdeckt.

In dem obigen Ausführungsbeispiel wird die Kraft F_{G} durch eine in dem Charger-Gehäuse 2 befindlichen und einerseits mit der Schwenkvorrichtung und andererseits mit dem Charger-Gehäuse 2 verbundenen Feder 26 erzeugt. Alternativ zur Feder 26 könnte jedoch auch eine hydraulische, pneumatische oder elektromechanische Vorrichtung die Kraft F_{G} erzeugen. Die Schwenkvorrichtung mit der beaufschlagten Kraft F_{G} passt die Geräteablage 6 automatisch an die verschiedenen Ausmaße des zu ladenden Gerätes, insbesondere die unterschiedlichen Dicken der Geräte und Positionierungen der Ladebuchse an den Geräten, an, so dass unterschiedliche Geräte ohne Anpassung der Ladevorrichtung 1 geladen werden können. Zusätzlich oder alternativ kann die Geräteablage 6 durch einen Klemm- oder Rastmechanismus in der Schwenkvorrichtung in mindestens einer Stellung, insbesondere in der Ladestellung und/oder der Ruhestellung, festgestellt werden. Des Weiteren hat die Feder 26 die Wirkung, dass die Einschwenkbewegung der Geräteablage 6 gedämpft wird.

Außerdem befindet sich in dem Charger-Gehäuse 2 ein Netzschalter 27, der durch die Gelenkstange 22 der Schwenkvorrichtung betätigt wird, und der die Ladeelektronik 32 in der Ruhestellung der Geräteablage 6 vom Stromnetz trennt und in der Ladestellung der Geräteablage 6 die Ladeelektronik 32 mit dem Stromnetz verbindet. Dadurch wird sichergestellt, dass keine Standby-Ströme durch die Ladeelektronik 32 fließen können, solange kein Gerät in die Ladevorrichtung 1 aufgelegt ist.

Des Weiteren kann die Stützfläche 7 der Geräteablage 6 eine Antirutsch-Beschichtung 8, z.B. aus Gummi, aufweisen, um ein Rutschen und ein Verkratzen des Gerätes zu verhindern. Die Geräteablage 6 kann aus Kunststoff oder zur besonderen Festigkeit aus Metall gefertigt sein.

Die Geräteablage 6 kann so stabil ausgebildet werden, dass die Ladevorrichtung 1 mittels der Geräteablage 6 als Griff in der ausgeschwenkten Stellung aus der Steckdose herausgezogen werden kann.

Alternativ zum beweglichen Steckermodul 10 in dem Charger-Gehäuse 2 kann auch ein unbeweglicher Stecker auf der Frontseite des Charger-Gehäuses 2 angebracht sein.

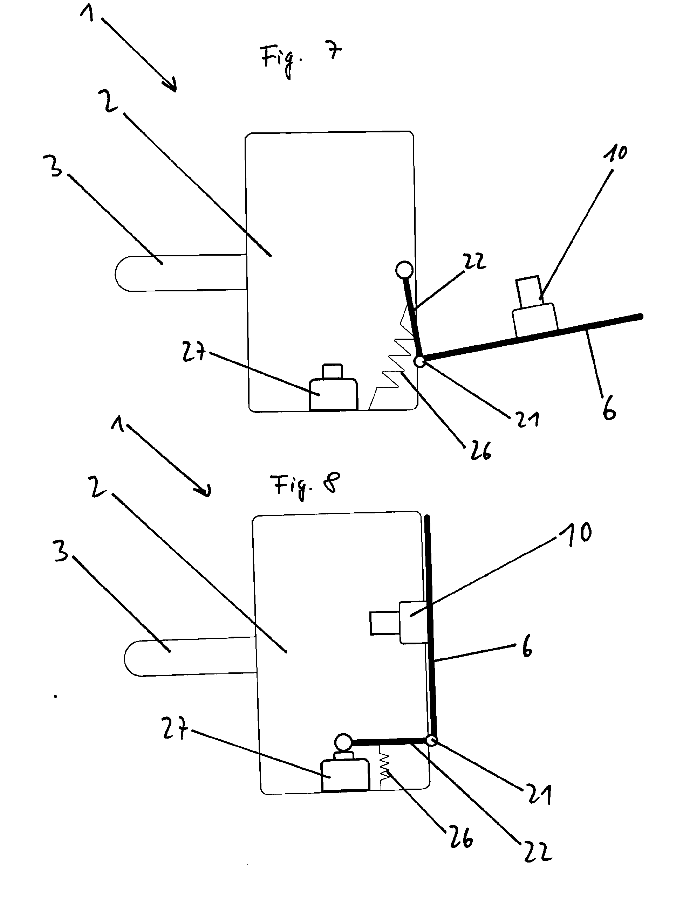

In Fig. 7 und Fig. 8 ist eine zweite Ausführungsform der erfindungsgemäßen Ladevorrichtung 1 in Ladestellung bzw. Ruhestellung dargestellt. Bei der zweiten Ausführungsform ist der Ladekoppler 10,12 in Form eines Steckermoduls 10 direkt an der Geräteablage 6 befestigt, wobei die Geräteablage 6 hier als eine Klappe ausgebildet ist. Dies ermöglicht eine stehende, etwa senkrechte Ladestellung, und vereinfacht die Schwenkvorrichtung, so dass sie lediglich ein Scharnier 21 und eine Gelenkstange 22 aufweist. Die Schwenkvorrichtung ist ebenfalls mit einer Kraft F_{G} durch eine Feder 26 beaufschlagt. In der Ruhestellung verdeckt die Klappe 6 das Charger-Gehäuse 2. Das Steckermodul 10 wird in der Ruhestellung in einer in der Frontseite des Charger-Gehäuses 2 befindlichen Vertiefung aufgenommen.

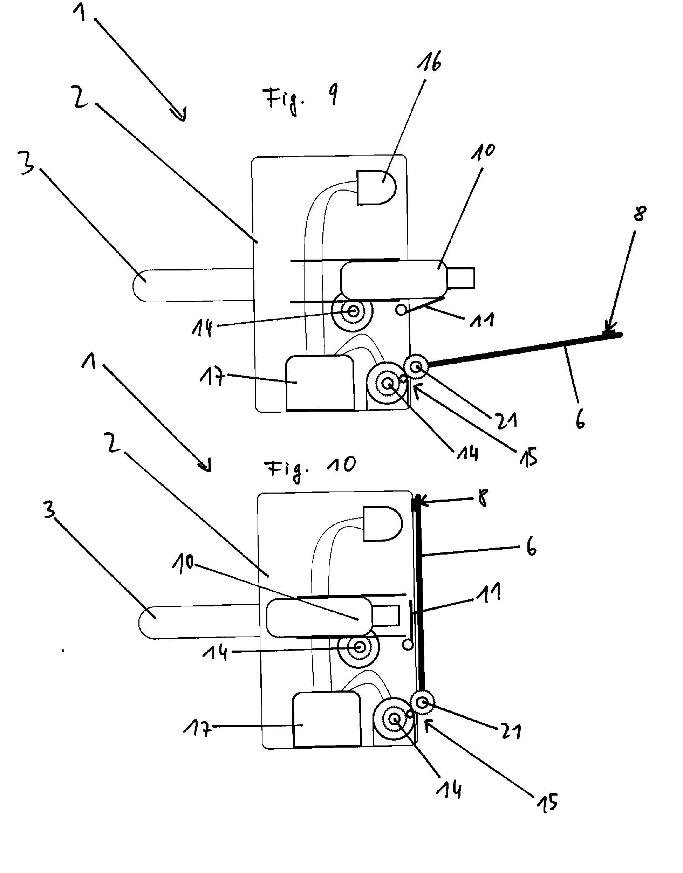

In Fig. 9 und Fig. 10 ist eine dritte Ausführungsform der erfindungsgemäßen Ladevorrichtung 1 in Ladestellung bzw. Ruhestellung dargestellt. Hierbei wird die Schwenkvorrichtung der ersten oder zweiten Ausführungsform durch mindestens einen elektrischen Motor 14 ersetzt, der die schwenkbare Geräteablage 6 und das verschiebbare Steckermodul 10 z.B. durch ein Zahnradgetriebe 15 oder einen Zahnrad-Zahnstangenantrieb antreibt. Mindestens ein elektrischer Motor 14 wird durch in dem Charger-Gehäuse 2 angebrachte Nährungssensoren 16 und eine elektronische Motorsteuerung 17 gesteuert, so dass die Geräteablage 6 berührungslos vom Benutzer ausgeschwenkt werden kann. In dem dargestellten Ausführungsbeispiel sind zwei elektrische Motoren 14 vorhanden, die jeweils das Steckermodul 10 und die Geräteablage 6 antreiben.

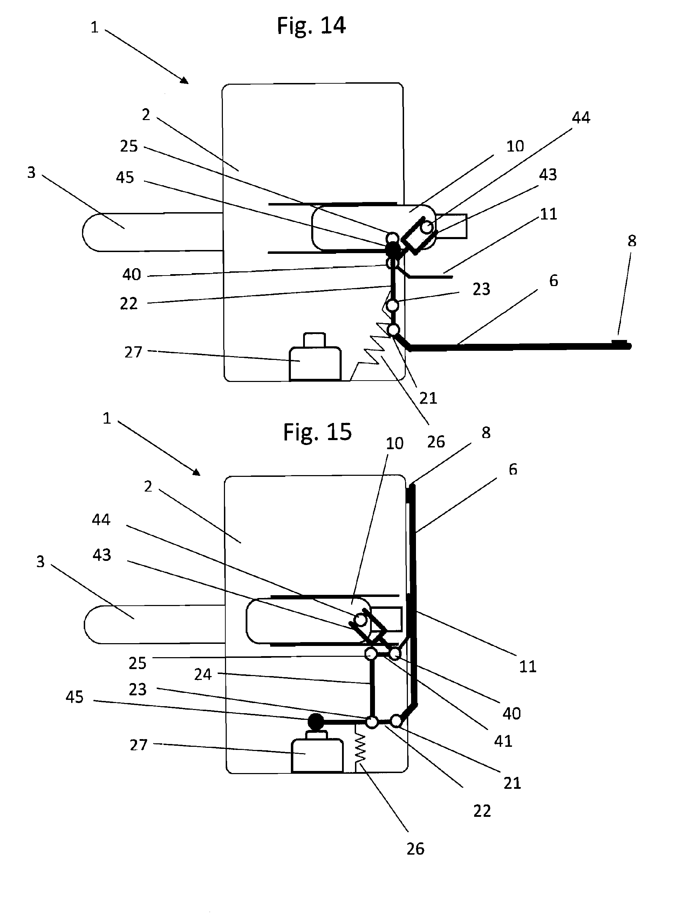

Fig. 14 und Fig. 15 zeigen eine vierte Ausführungsform der erfindungsgemäßen Ladevorrichtung 1 in Ladestellung bzw. Ruhestellung. Bei dieser Ausführungsform ist die Schwenkvorrichtung verändert, so dass am Ende der Gelenkstange 22 ein Nippel 45 befestigt wurde, der den Netzschalter 27 betätigt. Außerdem wurde das Gelenk 23 auf der Gelenkstange 22 näher am Scharnier 21 befestigt. Zusätzlich wurde das Gelenk 25 mittels der dritten Gelenkstange 41 mit der Ladesteckerabdeckung 11 fest verbunden und auf dem Scharnier 40 gelagert. Um das Steckermodul 10 verschieben zu können, wurde zusätzlich eine Gabel 43 auf dem Scharnier 40 gelagert und mit der Gelenkstange 41 fest verbunden, wobei die Gabel 43 einen seitlichen zylinderförmigen Ansatz 44 auf dem Steckermodul 10 mit ihrer Gabelung umgreift, so dass bei einem Verschieben der Gelenkstange 41 durch ein Ausschwenken bzw. Einschwenken der Geräteablage 6 in die Lade- bzw. Ruhestellung das Steckermodul 10 mittels der Gabel 43 aus- bzw. eingeschoben und zusätzlich die Ladesteckerabdeckung 11 automatisch aus- bzw. eingeschwenkt wird.

Weitere mögliche Ausführungsformen könnten aus einer Kombination der oben beschriebenen Ausführungsformen gebildet werden, so dass z.B. das Steckermodul 10 und/oder die Ladesteckerabdeckung 11 durch einen elektrischen Motor mit einer elektrischen Motorsteuerung 17 und einem Nährungssensor 16 angetrieben wird und die Geräteablage 6 zusätzlich manuell betätigt und/oder mit einer mechanischen Schwenkvorrichtung ausgeführt ist, wobei die Feder 26 als Dämpfmittel für die Einschwenkbewegung der Geräteablage dienen kann. Auch wäre vorstellbar, die Ladevorrichtung 1 gemäß der zweiten Ausführungsform auszubilden, jedoch mit einem elektrischen Motor 14 als Antrieb für die Geräteablage 6 anstatt der mechanischen Schwenkvorrichtung.

Alternativ oder zusätzlich zum Steckermodul 10 kann der Ladekoppler 10,12 aus einer in der Geräteablage 6 eingearbeiteten Induktionsschleife 12 bestehen. Die Induktionsschleife 12 kann auch in dem Charger-Gehäuse 2 eingearbeitet sein, so dass ebenfalls eine stehende, etwa senkrechte Ladestellung während der Ladung durch Induktion ermöglicht wird.

Außerdem ist in dem Charger-Gehäuse eine mit der Ladeelektronik 32 verbundene Lichtleiste 34 zum Anzeigen des Lade- und/oder Betriebszustandes, insbesondere durch Farbe- und/oder Pulsfrequenz und/oder Dauerlicht und/oder Lauflicht und/oder Füllstandsanzeige durch Teilbeleuchtung, angeordnet. Dabei kann die Lichtleiste 34 in dem Charger-Gehäuse 2 so angeordnet sein, dass die eingeschwenkte Geräteablage 6 in Ruhestellung die Lichtleiste 34 abdeckt und bündig mit dem Charger-Gehäuse 2 abschließt. In der Ausführungsform in Fig. 1 kann beispielsweise die Lichtleiste 34 auf einer umfangsgemäßen Abstufung des Charger-Gehäuses 2 angeordnet sein, die durch die eingeschwenkte ringförmige Geräteablage 6 in Ruhestellung abgedeckt wird. Des Weiteren kann ein akustischer Signalton, insbesondere als mono- oder polyphoner Alarm oder als Sprachausgabe, das Ende des Ladevorgangs durch die Ladeelektronik 32 bestätigen.

Außerdem ist die Ladeelektronik 32 so aufgebaut, dass sie sich beim Einschalten durch den Netzschalter 27 automatisch in einen Standby-Modus versetzt und bei eingestecktem Gerät automatisch den Ladevorgang beginnt und nach dem Ende des Ladevorgangs sich selbständig in einen Standby-Modus versetzt. Zusätzlich könnte auch eine separate Zeitschaltung die Ladeelektronik nach Ablauf einer bestimmten Zeitspanne nach dem Ende des Ladevorgangs von der Netzversorgung trennen.

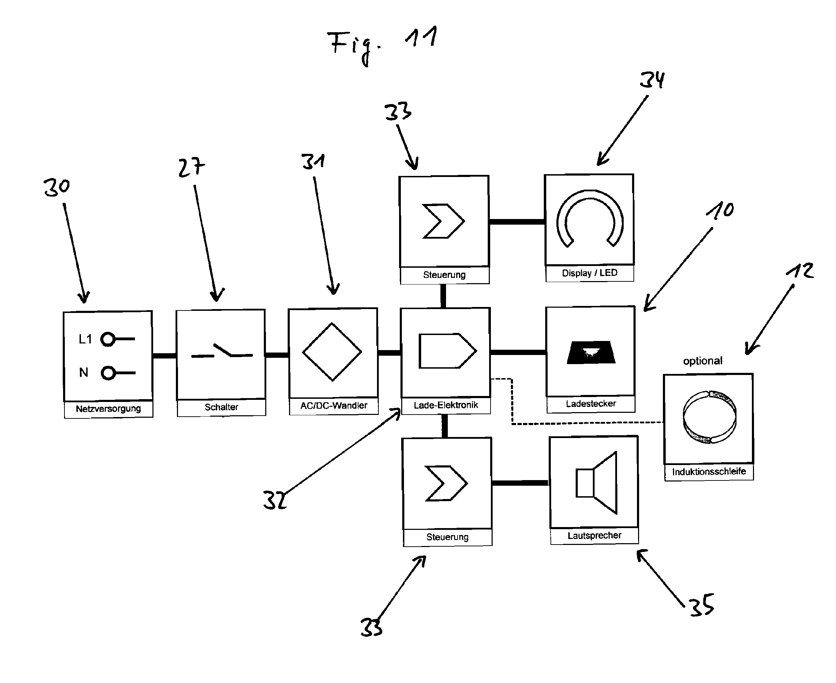

Fig. 11 zeigt ein Blockschaltbild der ersten Ausführungsform. Die Netzversorgung 30 ist über den Netzschalter 27 an einen AC/DC-Wandler 31 und die Ladeelektronik 32 angeschlossen. Die Ladeelektronik 32 speist den Ladestrom über den Stecker 10 in das zu ladende Gerät und ist außerdem mit den Steuerungen 33 der Lichtleiste 34 zum visuellen Anzeigen des Ladezustands und des Lautsprechers 35 zum akustischen Anzeigen des Ladezustands verbunden. Optional kann die Ladeelektronik 32 auch eine Induktionsschleife 12 zum Laden des Gerätes speisen.

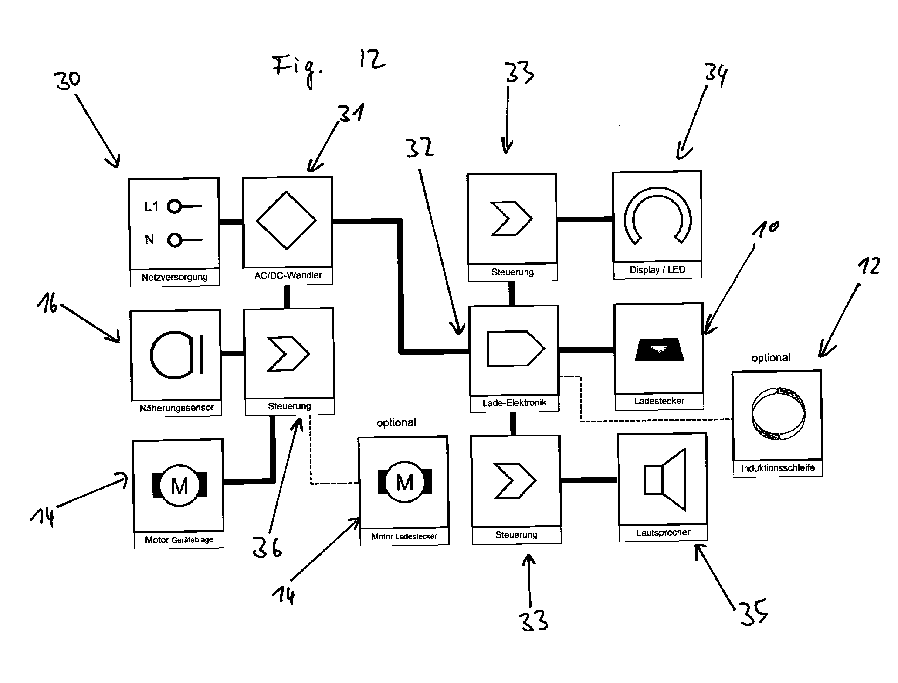

Fig. 12 zeigt ein Blockschaltbild der dritten Ausführungsform. Hier wird auf den Netzschalter aus Fig. 11 verzichtet und zusätzlich zur Schaltung aus Fig. 11 an den AC/DC-Wandler 31 eine Steuerung 36 angeschlossen. Die Steuerung 36 bekommt ein Signal von dem Nährungssensor 16 und steuert die elektrischen Motoren 14, die das Steckermodul 10 und die Geräteablage 6 antreiben.

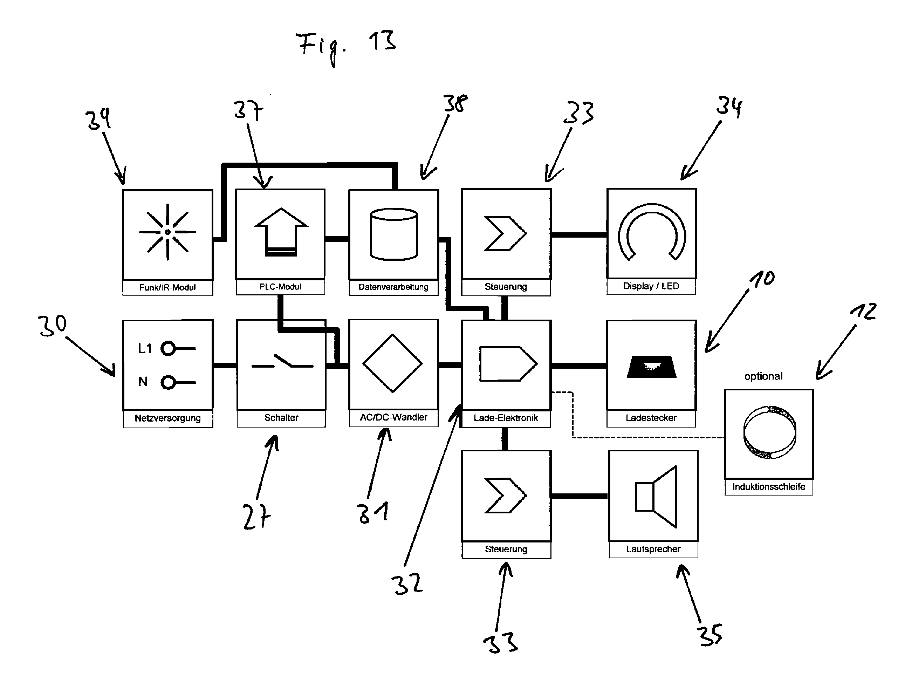

Zusätzlich zur Stromversorgung für den Ladevorgang kann der Ladekoppler 10,12 auch eine physikalische Datenverbindung, insbesondere eine USB-Datenverbindung oder eine analoge und/oder digitale Audio- oder Videoverbindung, zum Gerät ermöglichen. Die Audioverbindung könnte z. B. zur direkten Wiedergabe von Musik durch ein integriertes Audiosystem erfolgen. Die Datenverbindung kann auch dazu genutzt werden Ladezustände, wie z.B. das Ende des Ladevorgangs oder die erforderliche Ladespannung, direkt vom Gerät abzufragen. Insbesondere kann eine in dem Charger-Gehäuse 2 angeordnete Powerline-Elektronik und eine USB-over-IP Datenverarbeitungs-Einheit die USB-Datenverbindung in eine über das Stromnetz übertragene IP-Datenverbindung übersetzen und so eine direkte USB-Verbindung über das Stromnetz zu einem Datenendgerät mit entsprechender USB-over-IP Funktionalität simulieren. Fig. 13 zeigt ein Blockschaltbild dazu, wobei zusätzlich zu dem Blockschaltbild nach Fig. 11 ein Power Line Communication (PLC) Modul 37 an die Netzversorgung 30 hinter dem Netzschalter 27 angeschlossen wird. Das PLC Modul 37 ist ebenfalls an eine Datenverarbeitungs-Einheit 38 angeschlossen, welche an die Lade-Elektronik zum Zwecke der Datenübertragung vom und zum Gerät angeschlossen ist. Die Datenverarbeitungs-Einheit 38 übersetzt die USB-Daten in IP-Daten und übergibt sie an das PLC Modul 37 zum Zwecke der Übertragung über ein Powerline-Netz. Zusätzlich zu dem PLC-Modul 37 kann auch noch ein Funk-Modul 39 an die Datenverarbeitungs-Einheit 38 angeschlossen sein, um die Daten alternativ insbesondere über drahtlose Netze wie WLAN, Bluetooth oder Infrarot zu übertragen.

Die Erfindung ist nicht auf die dargestellten und beschriebenen Ausführungsbeispiele beschränkt, sondern umfasst auch alle im Sinne der Erfindung gleichwirkenden Ausführungen. Ferner ist die Erfindung bislang auch noch nicht auf die in dem jeweiligen unabhängigen Anspruch definierte Merkmalskombination beschränkt, sondern kann auch durch jede beliebige andere Kombination von bestimmten Merkmalen aller insgesamt offenbarten Einzelmerkmale definiert sein. Dies bedeutet, dass grundsätzlich praktisch jedes Einzelmerkmal des jeweiligen unabhängigen Anspruchs weggelassen bzw. durch mindestens ein an anderer Stelle der Anmeldung offenbartes Einzelmerkmal ersetzt werden kann. Insofern sind die Ansprüche lediglich als ein erster Formulierungsversuch für die jeweilige Erfindung zu verstehen.

## Patentansprüche

1. Ladevorrichtung (1) bestehend aus einem Charger-Gehäuse (2) und einer in dem Charger-Gehäuse (2) montierten Ladeelektronik (32), insbesondere zum elektrischen Laden eines mit einem wiederaufladbaren Energiespeicher versehenen elektronischen Gerätes, zum Beispiel eines Mobiltelefons, **gekennzeichnet durch** einen Ladekoppler (10,12) zur unmittelbaren Energieübertragung von der Ladeelektronik (32) zu dem Gerät und eine schwenkbare Geräteablage (6), welche in ihrem ausgeschwenkten Zustand eine Stützfläche (7) für das Gerät in einer Ladestellung bildet.

2. Ladevorrichtung (1) nach Anspruch 1,
**dadurch gekennzeichnet, dass** die Geräteablage (6) mittels einer Schwenkvorrichtung mit einer Kraft F_{G} beaufschlagt ist, die in entgegengesetzter Richtung zu einer Schwerkraft Fₛ des Gerätes wirkt, so dass die Kraft F_{G} die Geräteablage (6) von einer ausgeschwenkten Ladestellung automatisch in eine eingeschwenkte Ruhestellung schwenkt, wenn das Gerät nicht auf der Geräteablage (6) liegt.

3. Ladevorrichtung (1) nach Anspruch 1 oder 2,
**dadurch gekennzeichnet, dass** der Ladekoppler (10,12) aus einem an die Steckverbindung des Gerätes angepassten Steckermodul (10), insbesondere einem Micro-USB-Stecker (10) besteht.

4. Ladevorrichtung (1) nach Anspruch 3,
**dadurch gekennzeichnet, dass** das Steckermodul (10) in dem Charger-Gehäuse (2) verschiebbar gelagert ist und mit einer Schwenkvorrichtung, die durch die Geräteablage (6) betätigt wird, durch eine Steckeröffnung des Charger-Gehäuses (2) verschoben werden kann, so dass das Steckermodul (10) in eingeschwenkter Ruhestellung der Geräteablage (6) in dem Charger-Gehäuse (2) versenkt ist und in ausgeschwenkter Ladestellung der Geräteablage (6) aus dem Charger-Gehäuse (2) hervorsteht.

5. Ladevorrichtung (1) nach Anspruch 4,
**dadurch gekennzeichnet, dass** eine Ladesteckerabdeckung (11) die Steckeröffnung im versenkten Zustand des Steckermoduls (10) verschließt, wobei die Ladesteckerabdeckung (11) durch einen mit dem Steckermodul (10) oder der Geräteablage (6) verbundenen Mechanismus oder durch eine Feder in der Ruhestellung der Geräteablage (6) automatisch geschlossen wird.

6. Ladevorrichtung (1) nach Anspruch 3,
**dadurch gekennzeichnet, dass** das Steckermodul (10) an der Geräteablage (6) befestigt ist.

7. Ladevorrichtung (1) nach einem der Ansprüche 1 bis 6,
**dadurch gekennzeichnet, dass** der Ladekoppler (10,12) alternativ oder zusätzlich aus einer in der Geräteablage (6) oder dem Charger-Gehäuse (2) eingearbeiteten Induktionsschleife (12) besteht.

8. Ladevorrichtung (1) nach einem der Ansprüche 1 bis 7,
**dadurch gekennzeichnet, dass** die Geräteablage (6) als ein ringförmiger oder polygonförmiger Rahmen, kreisförmige oder polygonförmige Klappe oder eine Gabel ausgebildet ist.

9. Ladevorrichtung (1) nach einem der Ansprüche 1 bis 8,
**dadurch gekennzeichnet, dass** die Geräteablage (6) auf ihrer dem Charger-Gehäuse (2) zugewandten inneren Seite eine Antirutsch-Beschichtung (8) aufweist.

10. Ladevorrichtung (1) nach einem der Ansprüche 1 bis 9,
**dadurch gekennzeichnet, dass** die Schwenkvorrichtung der Geräteablage (6) aus einer mechanischen, hydraulischen, pneumatischen oder elektrischen Vorrichtung, insbesondere aus einem Scharnier (21), mindestens einer Gelenkstange (22) und einer Feder (26) oder einem elektrischen Motor (14) besteht.

11. Ladevorrichtung (1) nach einem der Ansprüche 1 bis 10,
**dadurch gekennzeichnet, dass** die Geräteablage (6) in ihrer eingeschwenkten Stellung bündig mit dem Charger-Gehäuse (2) abschließt.

12. Ladevorrichtung (1) nach einem der Ansprüche 1 bis 11,
**dadurch gekennzeichnet, dass** die Geräteablage (6) durch einen Klemm- oder Rastmechanismus in mindestens einer Stellung, insbesondere in der Ladestellung und/oder der Ruhestellung, festgestellt wird.

13. Ladevorrichtung (1) nach einem der Ansprüche 1 bis 12,
**dadurch gekennzeichnet, dass** die Geräteablage (6) in ihrer eingeschwenkten Stellung das Charger-Gehäuse (2) abdeckt.

14. Ladevorrichtung (1) nach einem der Ansprüche 1 bis 13,
**dadurch gekennzeichnet, dass** die Schwenkvorrichtung der Geräteablage (6) einen Netzschalter (27) in dem Charger-Gehäuse (2) betätigt, der die Ladeelektronik (32) in eingeschwenkter Ruhestellung der Geräteablage (6) vom Stromnetz trennt und in ausgeschwenkter Ladestellung mit dem Stromnetz verbindet.

15. Ladevorrichtung (1) nach einem der Ansprüche 1 bis 14,
**dadurch gekennzeichnet, dass** das die Rückseite des Charger-Gehäuses (2) als Steckerladegerät für Steckdosen der Gebäudeinstallationstechnik ausgebildet ist.

16. Ladevorrichtung (1) nach Anspruch 15,
**dadurch gekennzeichnet, dass** das Charger-Gehäuse (2) so ausgebildet und bemessen ist, dass es bündig mit dem Gehäuse der Steckdose der Gebäudeinstallationstechnik abschließt.

17. Ladevorrichtung (1) nach einem der Ansprüche 1 bis 16,
**dadurch gekennzeichnet, dass** das Charger-Gehäuse (2) als ein Einsatzteil für eine Aufputz- oder Unterputzdose der Gebäudeinstallationstechnik ausgebildet ist.

18. Ladevorrichtung (1) nach einem der Ansprüche 1 bis 17,
**dadurch gekennzeichnet, dass** in dem Charger-Gehäuse (2) eine mit der Ladeelektronik (32) verbundene Lichtleiste (34) zum Anzeigen des Lade-und/oder Betriebszustandes,
insbesondere durch Farbe- und/oder Pulsfrequenz und/oder Dauerlicht und/oder Lauflicht und/oder Füllstandsanzeige durch Teilbeleuchtung, angeordnet ist.

19. Ladevorrichtung (1) nach einem der Ansprüche 1 bis 18,
**dadurch gekennzeichnet, dass** ein akustischer Signalton das Ende des Ladevorgangs bestätigt.

20. Ladevorrichtung (1) nach einem der Ansprüche 1 bis 19,
**dadurch gekennzeichnet, dass** sich die Ladeelektronik (32) nach dem Ladevorgang selbständig abschaltet.

21. Ladevorrichtung (1) nach einem der Ansprüche 1 bis 20,
**dadurch gekennzeichnet, dass** die Schwenkvorrichtung der Geräteablage (6) mit dem Charger-Gehäuse (2) so stabil ausgebildet ist, dass die Ladevorrichtung (1) mittels der Geräteablage (6) aus der Steckdose der Gebäudeinstallationstechnik herausgezogen werden kann.

22. Ladevorrichtung (1) nach einem der Ansprüche 1 bis 21,
**dadurch gekennzeichnet, dass** die Geräteablage (6) und die Lichtleiste (34) so ausgebildet und angeordnet sind, dass die eingeschwenkte Geräteablage (6) in Ruhestellung die Lichtleiste (34) abdeckt.

23. Ladevorrichtung (1) nach einem der Ansprüche 1 bis 22,
**dadurch gekennzeichnet, dass** die Schwenkvorrichtung der Geräteablage (6) und/oder des Steckermoduls (10) durch einen elektrischen Motor (14) betätigt wird.

24. Ladevorrichtung (1) nach einem der Ansprüche 1 bis 23,
**dadurch gekennzeichnet, dass** der elektrische Motor (14) durch in dem Charger-Gehäuse (2) angebrachte Nährungssensoren (16) und eine elektronische Motorsteuerung (17) gesteuert wird.

25. Ladevorrichtung (1) nach einem der Ansprüche 1 bis 24,
**dadurch gekennzeichnet, dass** der Ladekoppler (10,12) auch eine physikalische Datenverbindung, insbesondere eine USB-Datenverbindung oder analoge und/oder digitale Audio- oder Videoverbindung, zum Gerät ermöglicht.

26. Ladevorrichtung (1) nach einem der Ansprüche 1 bis 25,
**dadurch gekennzeichnet, dass** ein in dem Charger-Gehäuse (2) angeordnetes PLC-Modul (37) oder ein Funk-Modul (39) und eine Datenverarbeitungs-Einheit (38) die USB-Datenverbindung in eine über das Stromnetz übertragene IP-Datenverbindung übersetzt.
